# EUROPEAN PATENT APPLICATION

(11) **EP 2 410 402 A1**
(43) Date of publication of application: **25.01.2012**
(21) Application number: 10177695.3
(22) Date of filing: 20.09.2010
(51) Int. Cl.: G06F 3/02

(54) **Keyboard with mode-switching function**

(30) Priority: 23.07.2010 TW 099124268
(71) Applicant: Primax Electronics Ltd, 114 Neihu, Taipei (TW)
(72) Inventor: Huang, Bin-Hui, Taiwan, ROC, Taipei (TW); Yang, Chien-Ming, Taiwan, ROC, Taipei (TW)
(74) Representative: Rees, Simon John Lewis

(57) **Abstract**

A keyboard with a mode-switching function is provided. The keyboard includes at least one key, a pressure sensing circuit, an illumination module, a mode-switching program and a controlling unit. The mode-switching program is executable to enable both the pressure sensing circuit and the illumination module, so that the keyboard is operated in a pressure sensitive and luminous mode. The pressure sensing circuit is used for detecting the pressure, and generating a corresponding pressure-strength sensing voltage in response to the pressure. According to the pressure-strength sensing voltage, the illumination module is controlled by the controlling unit to emit either a first light beam or a second light beam.

## Description

### FIELD OF THE INVENTION

The present invention relates to an input device, and more particularly to a computer keyboard.

### BACKGROUND OF THE INVENTION

Generally, the common input device of a computer system includes for example a mouse, a keyboard or a trackball. Via the keyboard, the user may input characters and instructions into the computer system. As a consequence, most users and most manufacturers pay much attention to the development of keyboards.

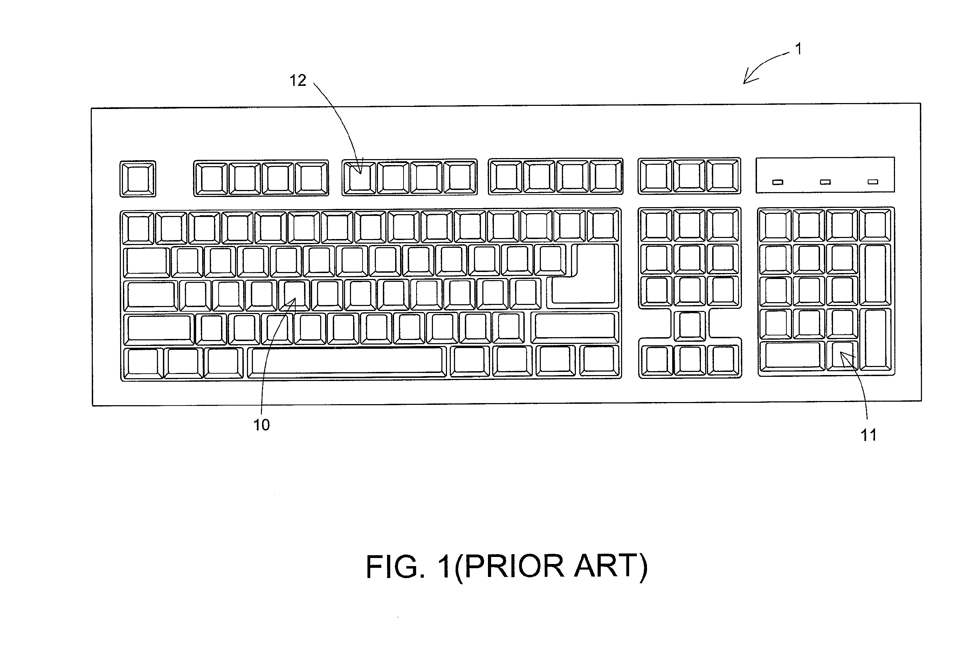

FIG. 1 is a schematic view illustrating the outward appearance of a keyboard according to the prior art. The surface of the computer keyboard 1 includes plural keys. These keys include ordinary keys 10, numeric keys 11 and function keys 12. When one or more keys are depressed by the user, a corresponding signal is issued to the computer, and thus the computer executes a function corresponding to the depressed key or keys. For example, when the ordinary keys 10 are depressed, corresponding English letters or symbols are inputted into the computer system. In addition, the function keys 12 (FI~F12) can be programmed to cause corresponding application programs to provide certain functions.

Nowadays, with the maturity of computing technologies, the conventional keyboard 1 that has basic functions fails to meet the users' requirements. For this reason, the keyboard manufacturers make efforts in designing novel keyboards with diversified functions. For example, a pressure sensitive keyboard having a pressure sensing function and a luminous keyboard having a luminous function have been disclosed. In the pressure sensitive keyboard, a pressure sensing module is disposed under the plural keys for sensing the pressure exerted on the key that is depressed by the user. Generally, the pressure sensitive keyboard has a preset pressure value. In a case that the pressure exerted on the depressed key is lower than the preset pressure value, the pressure sensitive keyboard issues a first sensing signal. In response to the first sensing signal, the computer will execute a first instruction. Whereas, in a case that the pressure exerted on the depressed key is higher than the preset pressure value, the pressure sensitive keyboard issues a second sensing signal. In response to the second sensing signal, the computer will execute a second instruction.

Take a process of inputting a character to a Notepad document for example. The key to be depressed is the key A. In a case that a first pressure lower than the preset pressure value is exerted on the key A, a small letter "a" is shown on the Notepad document in response to the depressing action of the user. Whereas, in a case that a second pressure higher than the preset pressure value is exerted on the key A, a capital letter "A" is shown on the Notepad document in response to the depressing action of the user.

Generally, the luminous keyboard has an illumination module. When a key of the luminous keyboard is depressed by the user, the illumination module will emit light beams to illuminate the luminous keyboard. As a consequence, even if the luminous keyboard is used in a dim environment or a dark environment (e.g. in a vehicle), the user may still actually depress any key of the luminous keyboard.

In other words, these two special kinds of keyboards have expanded functions. However, in some circumstance, the basic functions of the keyboard are enough and feasible, and thus the expanded functions need to be disabled. For example, if the keyboard is used in a bright environment, the illuminating function of the luminous keyboard is no longer feasible, but the basic function of inputting the English letters need to be retained.

Therefore, there is a need of providing a keyboard with a mode-switching function for allowing the user to arbitrarily switch the operating mode of the keyboard.

### SUMMARY OF THE INVENTION

The present invention provides a keyboard with a mode-switching function.

In accordance with an aspect of the present invention, there is provided a keyboard with a mode-switching function. The keyboard is in communication with a computer host. The keyboard includes at least one key, a pressure sensing circuit, a mode-switching program, a mode-switching program and a controlling unit. The key is depressed in response to a pressure. The pressure sensing circuit is used for detecting the pressure, and generating a corresponding pressure-strength sensing voltage in response to the pressure. The mode-switching program is executable to have the keyboard operate in a pressure sensitive mode. The controlling unit is connected with the key and the pressure sensing circuit for detecting a strength of the pressure when the keyboard is operated in the pressure sensitive mode. If the controlling unit judges that the pressure-strength sensing voltage is lower than the preset threshold voltage value, the computer executes a lightly-depressed instruction. Whereas, if the controlling unit judges that the pressure-strength sensing voltage is higher than or equal to the preset threshold voltage value, the computer executes a heavily-depressed instruction.

In an embodiment, the computer host is in communication with a display screen. In response to the lightly-depressed instruction, a small letter of an English letter corresponding to the depressed key is shown on the display screen. Whereas, in response to the heavily-depressed instruction, a capital letter of the English letter corresponding to the depressed key is shown on the display screen.

In an embodiment, the keyboard further includes a first mode-switching key. By depressing the first mode-switching key, the mode-switching program is executed to have the keyboard operate in the pressure sensitive mode.

In an embodiment, the keyboard further includes a first mode-indicating lamp for illuminating to indicate that the keyboard is in the pressure sensitive mode.

In an embodiment, the keyboard further includes an illumination module connected with the controlling unit. In addition, the mode-switching program is further executable to have the keyboard operate in a luminous mode.

In an embodiment, the keyboard is operated in the luminous mode. If the controlling unit judges that the pressure-strength sensing voltage is lower than the preset threshold voltage value, the illumination module emits a first light beam. Whereas, if the controlling unit judges that the pressure-strength sensing voltage is higher than or equal to the preset threshold voltage value, the illumination module emits a second light beam.

In an embodiment, the keyboard further includes a second mode-switching key. By depressing the second mode-switching key, the mode-switching program is executed to have the keyboard operate in the luminous mode.

In an embodiment, the keyboard further includes a first mode-indicating lamp for illuminating to indicate that the keyboard is in the luminous mode.

In accordance with another aspect of the present invention, there is provided a keyboard with a mode-switching function. The keyboard is in communication with a computer host. The keyboard includes at least one key, a pressure sensing circuit, an illumination module, a mode-switching program and a controlling unit. The key is depressed in response to a pressure. The pressure sensing circuit is used for detecting the pressure, and generating a corresponding pressure-strength sensing voltage in response to the pressure. The illumination module is used for emitting either a first light beam or a second light beam. The mode-switching program is executable to enable both the pressure sensing circuit and the illumination module, so that the keyboard is operated in a pressure sensitive and luminous mode. The controlling unit is connected with the key, the pressure sensing circuit and the illumination module. When the keyboard is operated in the pressure sensitive and luminous mode, the illumination module is controlled by the controlling unit to emit either the first light beam or the second light beam according to a strength of the pressure. If the controlling unit judges that the pressure-strength sensing voltage is lower than the preset threshold voltage value, the computer executes a lightly-depressed instruction and the illumination module emits the first light beam. Whereas, if the controlling unit judges that the pressure-strength sensing voltage is higher than or equal to the preset threshold voltage value, the computer executes a heavily-depressed instruction and the illumination module emits the second light beam.

In an embodiment, the keyboard further includes a mode-switching key. By depressing the mode-switching key, the mode-switching program is executed to have the keyboard operate in the pressure sensitive and luminous mode.

In an embodiment, the keyboard further includes a mode-indicating lamp for illuminating to indicate that the keyboard is in the pressure sensitive and luminous mode.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic view illustrating the outward appearance of a keyboard according to the prior art;

FIG. 2 is a schematic side view illustrating a keyboard with a mode-switching function according to a first embodiment of the present invention;

FIG. 3 is a schematic perspective view illustrating the usage status of the keyboard with a mode-switching function according to the first embodiment of the present invention, in which the keyboard is operated in a pressure sensitive mode;

FIG. 4 is a schematic side view illustrating a keyboard with a mode-switching function according to a second embodiment of the present invention;

FIG. 5 is a schematic perspective view illustrating the usage status of the keyboard with a mode-switching function according to the second embodiment of the present invention, in which the keyboard is operated in a pressure sensitive mode;

FIG. 6 is a schematic side view illustrating the keyboard with a mode-switching function according to the second embodiment of the present invention, in which the keyboard is operated in a luminous mode;

FIGS. 7A and 7B are schematic side views illustrating the keyboard with a mode-switching function according to the second embodiment of the present invention, in which the keyboard is operated in both of a pressure sensitive mode and a luminous mode; and

FIGS. 8A and 8B are schematic side views illustrating the keyboard with a mode-switching function according to a third embodiment of the present invention.

### DETAILED DESCRIPTION OF THE PREFERRED EMBODIMENT

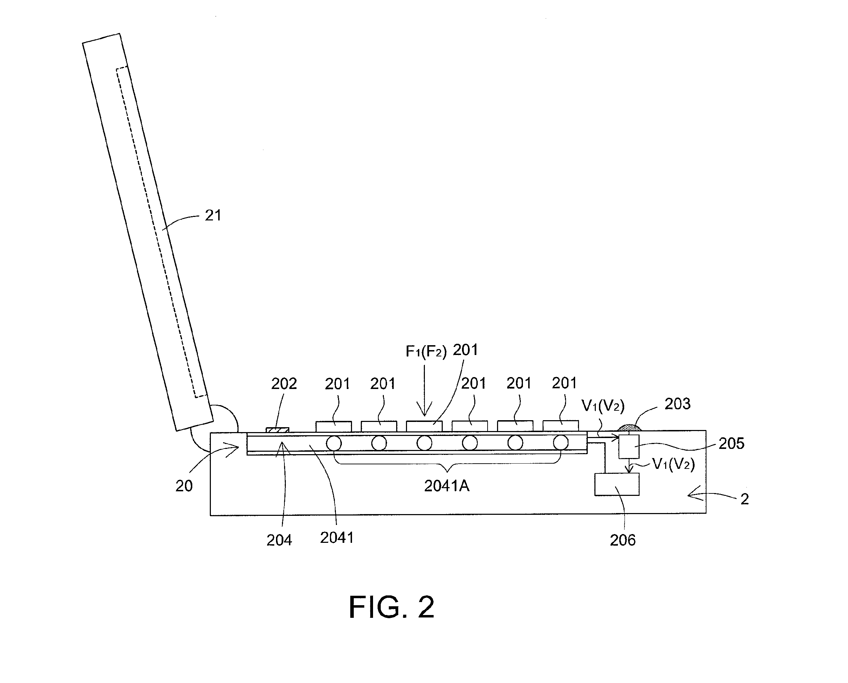

For obviating the drawbacks encountered from the prior art, the present invention provides a keyboard with a mode-switching function. FIG. 2 is a schematic side view illustrating a keyboard with a mode-switching function according to a first embodiment of the present invention. As shown in FIG. 2, a computer host 2 is in communication with a keyboard 20 and a display screen 21. The keyboard 20 is installed on the computer host 2. In this embodiment, the computer host 2 is a notebook computer. The keyboard 20 comprises plural keys 201, a mode-switching key 202, a mode-indicating lamp 203, a membrane switch circuit module 204, a mode-switching program 205 and a controlling unit 206.

The plural keys 201 are exposed outside the surface of the keyboard 20 to be depressed by the user in response to a first pressure F1. The membrane switch circuit module 204 is disposed under the plural keys 201. In addition, the membrane switch circuit module 204 comprises a pressure detecting circuit 2041 for detecting the first pressure F1, and generating a first pressure-strength sensing voltage V1 in response to the first pressure F1. The pressure detecting circuit 2041 comprises plural pressure detecting elements 2041A corresponding to respective keys 201. The mode-switching program 205 is burned into a circuit board (not shown) within the keyboard 20. When the mode-switching program 205 is executed, the operating mode of the keyboard 20 is switched from a basic mode to a pressure sensitive mode. The controlling unit 206 is connected with the plural keys 201 and the pressure detecting circuit 2041. The controlling unit 206 has a preset threshold voltage value. According to the preset threshold voltage value, the controlling unit 206 may judge the strength of the first pressure F1 when the keyboard 20 is in the pressure sensitive mode. The mode-switching key 202 is exposed outside the surface of the keyboard 20. By depressing the mode-switching key 202, the mode-switching program 205 is executed to have the keyboard 20 switch from the basic mode to the pressure sensitive mode. Alternatively, by depressing the mode-switching key 202, the mode-switching program 205 is executed to have the keyboard 20 switch from the pressure sensitive mode to the basic mode. The mode-indicating lamp 203 is exposed outside the surface of the keyboard 20 for emitting light beams and indicating the pressure sensitive mode of the keyboard 20.

The operations of the keyboard 20 will be illustrated in more details as follows. In a case that the keyboard 20 is operated in the basic mode, the pressure detecting circuit 2041 is disabled and the mode-indicating lamp 203 is turned off. In the basic mode, even if the first key 201 of the plural keys 201 is depressed by the user in response to the first pressure F1, the first pressure detecting element 2041A of the pressure detecting circuit 2041 corresponding to the first key 201 does not generate the first pressure-strength sensing voltage V1 in response to the first pressure F1. Meanwhile, the strength of the first pressure F1 is not judged by the controlling unit 206, but only the key code corresponding to depressed first key 201 is detected by the controlling unit 206. The process of generating the key code is well known in the art, and is not redundantly described herein. Then, the key code corresponding to depressed first key 201 is outputted from the controlling unit 206. Consequently, the computer host 2 executes an instruction corresponding to the key code.

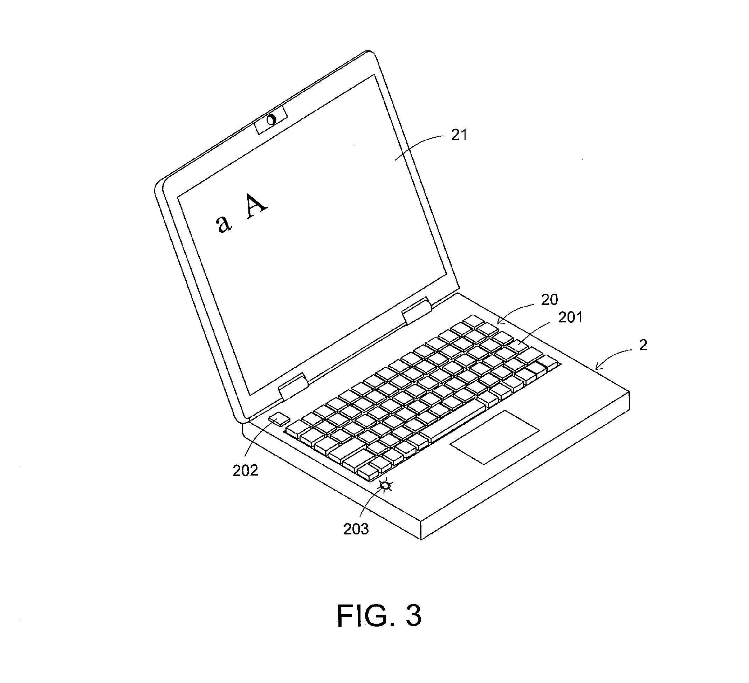

FIG. 3 is a schematic perspective view illustrating the usage status of the keyboard with a mode-switching function according to the first embodiment of the present invention, in which the keyboard is operated in a pressure sensitive mode. By depressing the mode-switching key 202, the mode-switching program 205 is executed to have the keyboard 20 switch from the basic mode to the pressure sensitive mode. Meanwhile, the pressure detecting circuit 2041 is enabled, and the mode-indicating lamp 203 illuminates to indicate that the keyboard 20 is in the pressure sensitive mode. On the other hand, if the mode-indicating lamp 203 is turned off, it means that the keyboard 20 is in the basic mode.

Please refer to FIG. 3 again. The keyboard 20 is operated in the pressure sensitive mode. In a case that the first key 201 is depressed by the user in response to the first pressure F1 (see FIG. 2), the first pressure detecting element 2041A of the pressure detecting circuit 2041 detects the first pressure F1 and generates the first pressure-strength sensing voltage V1 in response to the first pressure F1. By comparing the first pressure-strength sensing voltage V1 with the preset threshold voltage value, the controlling unit 206 may judge the strength of the first pressure F1. When the controlling unit 206 judges that the first pressure-strength sensing voltage V1 is lower than the preset threshold voltage value, the computer host 2 executes a lightly-depressed instruction.

Please refer to FIG 3 again. The keyboard 20 is operated in the pressure sensitive mode. In a case that the first key 201 is depressed by the user in response to a second pressure F2, the first pressure detecting element 2041A of the pressure detecting circuit 2041 detects the second pressure F2 and generates a second pressure-strength sensing voltage V2 in response to the second pressure F2. By comparing the second pressure-strength sensing voltage V2 with the preset threshold voltage value, the controlling unit 206 may judge the strength of the second pressure F2. When the controlling unit 206 judges that the second pressure-strength sensing voltage V2 is higher than or equal to the preset threshold voltage value, the computer host 2 executes a heavily-depressed instruction.

In this embodiment, the lightly-depressed instruction and the heavily-depressed instruction are executed to show a small letter and a capital letter, respectively. For example, in a case that the first pressure F1 is exerted on the first key (e.g. key A) of the keyboard 20, the computer host 2 executes a function of showing a small letter "a" on the display screen 21. Whereas, in a case that the second pressure F2 is exerted on the first key (e.g. key A) of the keyboard 20, the computer host 2 executes a function of showing a capital letter "A" on the display screen 21.

From the first embodiment, it is found that the operating mode of the keyboard 20 of the present invention may be switched between the basic mode and the pressure sensitive mode by depressing the mode-switching key 202. In addition, according to the turning on/off statuses of the mode-indicating lamp 203, the user may realize the current operating mode of the keyboard 20. Since the user may change the operating mode of the keyboard 20 according to the practical requirement, the flexibility of using the keyboard 20 is enhanced.

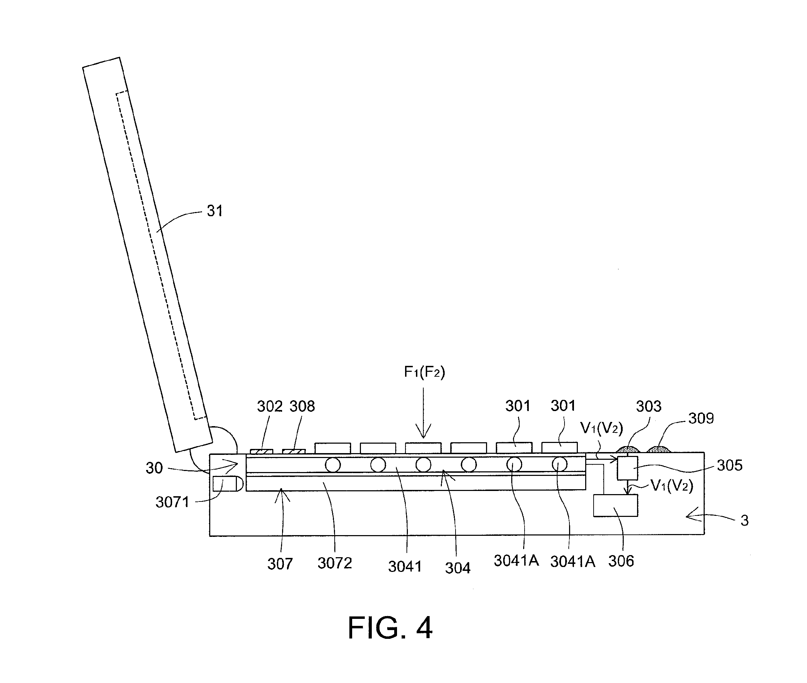

The present invention further provides a second embodiment of a keyboard with a mode-switching function. FIG. 4 is a schematic side view illustrating a keyboard with a mode-switching function according to a second embodiment of the present invention. As shown in FIG. 4, a computer host 3 is in communication with a keyboard 30 and a display screen 31. The keyboard 30 is installed on the computer host 3. In this embodiment, the computer host 3 is a notebook computer. The keyboard 30 comprises plural keys 301, a first mode-switching key 302, a first mode-indicating lamp 303, a membrane switch circuit module 304, a mode-switching program 305, a controlling unit 306, an illumination module 307, a second mode-switching key 308 and a second mode-indicating lamp 309. The configurations and functions of the plural keys 301, the first mode-switching key 302, the first mode-indicating lamp 303, the membrane switch circuit module 304, the mode-switching program 305 and the controlling unit 306 included in the keyboard 30 are similar to those of the keyboard 20 of the first embodiment, and are not redundantly described herein.

In comparison with the keyboard 20 of the first embodiment, the keyboard 30 of this embodiment further comprises the illumination module 307, the second mode-switching key 308 and the second mode-indicating lamp 309. The illumination module 307 is connected with the mode-switching program 305 and the controlling unit 306. The illumination module 307 comprises plural light emitting diodes 3071 and a light guide plate 3072. For clarification, only one light emitting diode 3071 is shown in the drawing. The plural light emitting diodes 3071 are used for emitting either a first light beam B1 or a second light beam B2. In this embodiment, the first light beam B1 has a first light color (e.g. a blue light color), and the second light beam B2 has a second light color (e.g. a green light color). The light guide plate 3072 is disposed under the pressure detecting circuit 3041 for changing the propagating directions of the first light beam B1 and the second light beam B2. The second mode-switching key 308 is exposed outside the surface of the keyboard 30, and arranged beside the first mode-switching key 302. By depressing the second mode-switching key 308, the mode-switching program 305 is executed to have the keyboard 30 switch from the basic mode to a luminous mode. Alternatively, by depressing the second mode-switching key 308, the mode-switching program 305 is executed to have the keyboard 30 switch from the luminous mode to the basic mode. The second mode-indicating lamp 309 is exposed outside the surface of the keyboard 30, and arranged beside the first mode-indicating lamp 303. The second mode-indicating lamp 309 will illuminate to indicate that the keyboard 30 is in the luminous mode.

The operations of the keyboard 30 in different operating modes will be illustrated as follows. In a case that the keyboard 30 is operated in the basic mode (see FIG. 4), the pressure detecting circuit 3041 of the membrane switch circuit module 304 and the illumination module 307 are both disabled, and the first mode-indicating lamp 303 and the second mode-indicating lamp 309 are both turned off. In the basic mode, even if the first key 301 of the plural keys 301 is depressed by the user in response to the first pressure F1, the first pressure detecting element 3041A of the pressure detecting circuit 3041 corresponding to the first key 301 does not generate the first pressure-strength sensing voltage V1 in response to the first pressure F1. In addition, the plural light emitting diodes 3071 are also disabled. Meanwhile, the strength of the first pressure F1 is not judged by the controlling unit 306, but only the key code corresponding to depressed first key 301 is detected by the controlling unit 306. Consequently, the computer host 3 executes an instruction corresponding to the key code.

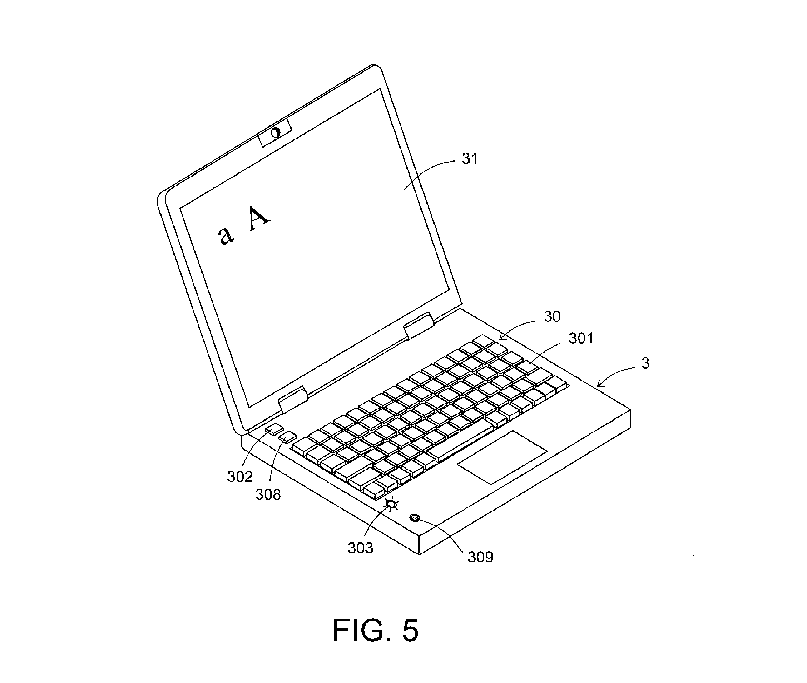

FIG. 5 is a schematic perspective view illustrating the usage status of the keyboard with a mode-switching function according to the second embodiment of the present invention, in which the keyboard is operated in a pressure sensitive mode. By depressing the first mode-switching key 302, the mode-switching program 305 is executed to have the keyboard 30 switch from the basic mode to the pressure sensitive mode. Meanwhile, the first mode-indicating lamp 303 will illuminate to indicate that the keyboard 30 is in the pressure sensitive mode. In this situation, the illumination module 307 is still disabled, and the second mode-indicating lamp 309 is still turned off.

Please refer to FIG. 5 again. The keyboard 30 is operated in the pressure sensitive mode. In a case that the first key 301 (e.g. the key A) is depressed by the user in response to the first pressure F1 (see FIG. 4), the first pressure detecting element 3041A of the pressure detecting circuit 3041 detects the first pressure F1 and generates the first pressure-strength sensing voltage V1 in response to the first pressure F1. By comparing the first pressure-strength sensing voltage V1 with the preset threshold voltage value, the controlling unit 306 may judge the strength of the first pressure F1. When the controlling unit 306 judges that the first pressure-strength sensing voltage V1 is lower than the preset threshold voltage value, the computer host 3 executes a lightly-depressed instruction for outputting a small letter "a". In response to the lightly-depressed instruction, the small letter "a" is shown on the display screen 31.

Whereas, in a case that the first key 301 is depressed by the user in response to the second pressure F2 (see FIG 4), the first pressure detecting element 3041A of the pressure detecting circuit 3041 detects the second pressure F2 and generates a second pressure-strength sensing voltage V2 in response to the second pressure F2. By comparing the second pressure-strength sensing voltage V2 with the preset threshold voltage value, the controlling unit 306 may judge the strength of the second pressure F2. When the controlling unit 306 judges that the second pressure-strength sensing voltage V2 is higher than or equal to the preset threshold voltage value, the computer host 3 executes a heavily-depressed instruction. In response to the heavily-depressed instruction, a capital letter "A" is shown on the display screen 31.

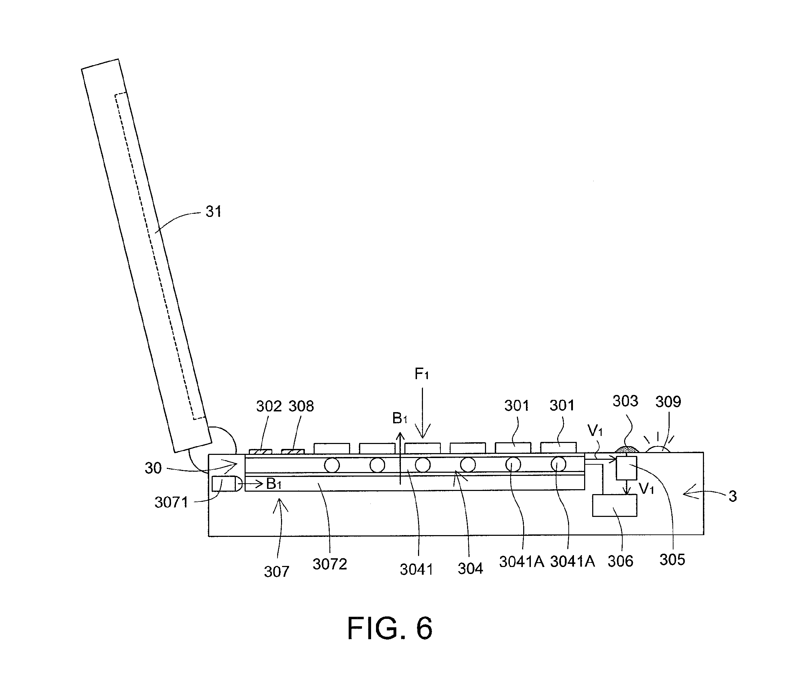

FIG. 6 is a schematic side view illustrating the keyboard with a mode-switching function according to the second embodiment of the present invention, in which the keyboard is operated in a luminous mode. By depressing the first mode-switching key 302, the mode-switching program 305 is executed to disable the pressure detecting circuit 3041, and thus the keyboard 30 is switched from the pressure sensitive mode to the basic mode. As the keyboard 30 is switched to the basic mode, the first mode-indicating lamp 303 is turned off. Next, by depressing the second mode-switching key 308, the mode-switching program 305 is executed to enable the illumination module 307, and thus the keyboard 30 is switched from the basic mode to the luminous mode. Meanwhile, the second mode-indicating lamp 309 illuminates to indicate that the keyboard 30 is in the luminous mode. In the luminous mode of the keyboard 30, if the first key 301 is depressed by the user in response to any pressure (e.g. a first pressure F1 as shown in FIG. 6), the pressure detecting circuit 3041 is disabled. Meanwhile, the key code corresponding to depressed first key 301 is detected by the controlling unit 306, and the code signal corresponding to the key code is outputted from the controlling unit 306 to the computer host 3. Consequently, the computer host 3 executes an instruction corresponding to the key code. At the same time, the controlling unit 306 issues a triggering signal to the illumination module 307. In response to the triggering signal, the plural light emitting diodes 3071 of the illumination module 307 emit the first light beam B1. By the light guide plate 3072, the propagating direction of the first light beam B1 is changed, so that the first light beam B1 is projected outside the keyboard 30 and the keyboard 30 exhibits the blue light.

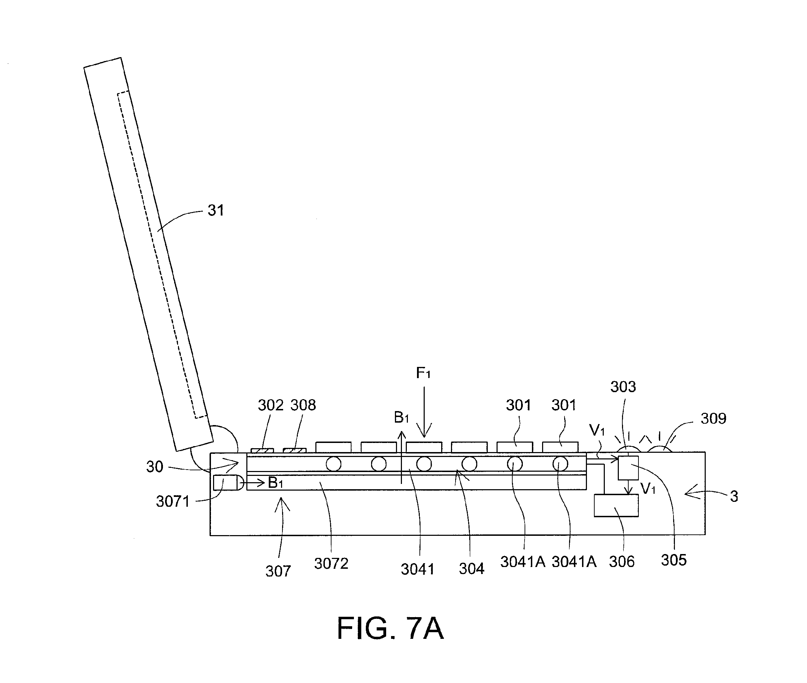

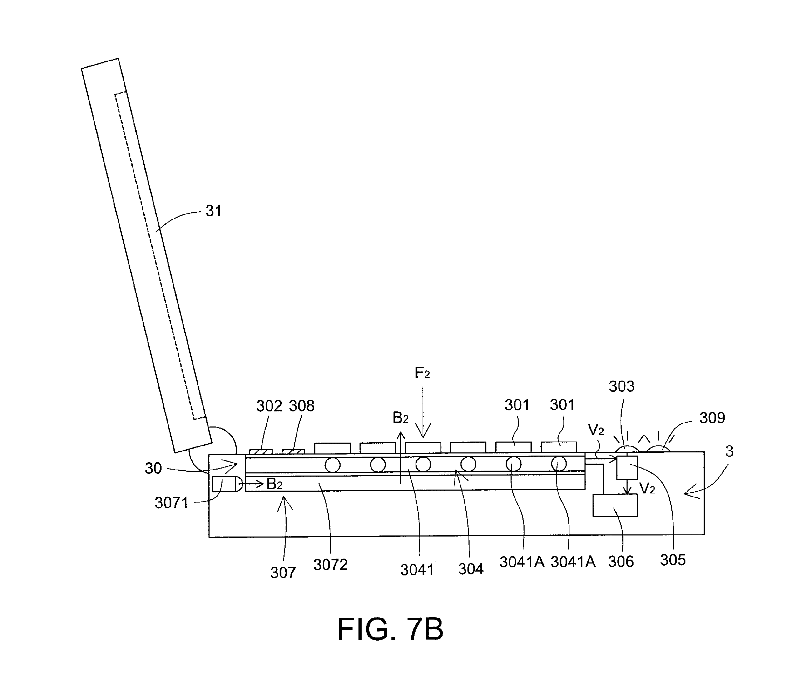

FIGS. 7A and 7B are schematic side views illustrating the keyboard with a mode-switching function according to the second embodiment of the present invention, in which the keyboard is operated in both of a pressure sensitive mode and a luminous mode. By depressing the first mode-switching key 302 again, the mode-switching program 305 is executed to have the keyboard 30 switched to the pressure sensitive mode. Meanwhile, the first mode-indicating lamp 303 will illuminate to indicate that the keyboard 30 is in the pressure sensitive mode. Since the second mode-indicating lamp 309 is not turned off but continuously illuminates, it means that the keyboard 30 is also in the luminous mode. In other words, it is considered that the keyboard 30 is operated in both of the pressure sensitive mode and the luminous mode.

As shown in FIG 7A, the keyboard 30 is operated in both of the pressure sensitive mode and the luminous mode. In a case that the first key 301 is depressed by the user in response to the first pressure F1 the first pressure detecting element 3041A of the pressure detecting circuit 3041 detects the first pressure F1 and generates the first pressure-strength sensing voltage V1 in response to the first pressure F1. By comparing the first pressure-strength sensing voltage V1 with the preset threshold voltage value, the controlling unit 306 may judge the strength of the first pressure F1. When the controlling unit 306 judges that the first pressure-strength sensing voltage V1 is lower than the preset threshold voltage value, the computer host 3 executes a lightly-depressed instruction and the illumination module 307 emits the first light beam B1. That is, if the first key 301 is depressed by the user in response to the first pressure F1, the computer host 3 executes an instruction of outputting the small letter "a", and the keyboard 30 exhibits the blue light.

Please refer to FIG. 7B. In a case that the first key 301 is depressed by the user in response to the second pressure F2 (see FIG 4), the first pressure detecting element 3041A of the pressure detecting circuit 3041 detects the second pressure F2 and generates a second pressure-strength sensing voltage V2 in response to the second pressure F2. By comparing the second pressure-strength sensing voltage V2 with the preset threshold voltage value, the controlling unit 306 may judge the strength of the second pressure F2. When the controlling unit 306 judges that the second pressure-strength sensing voltage V2 is higher than or equal to the preset threshold voltage value, the computer host 3 executes a heavily-depressed instruction and the illumination module 307 emits the second light beam B2. That is, if the first key 301 is depressed by the user in response to the second pressure F2, the computer host 3 executes an instruction of outputting the capital letter "A", and the keyboard 30 exhibits the green light.

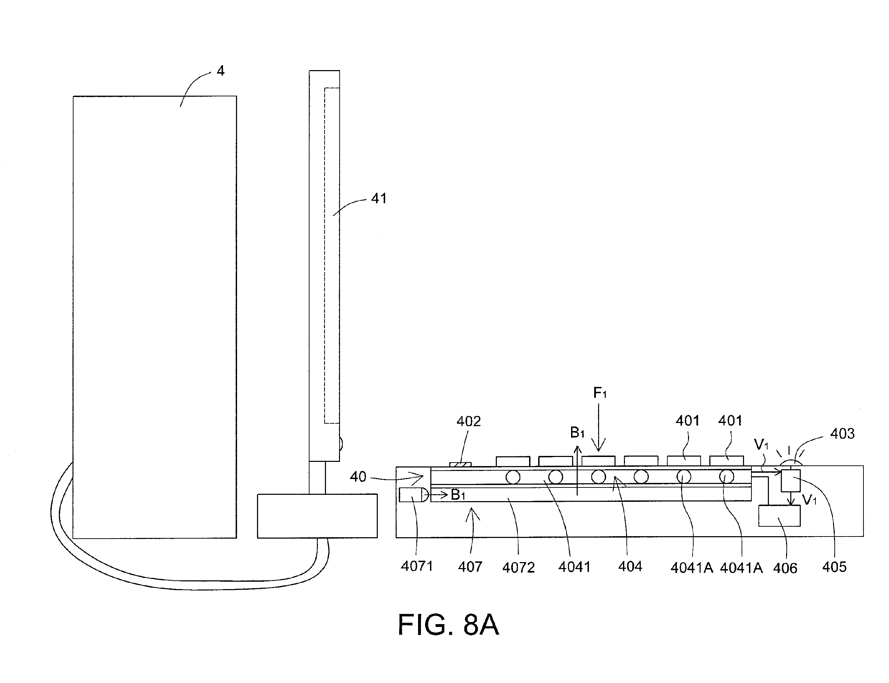

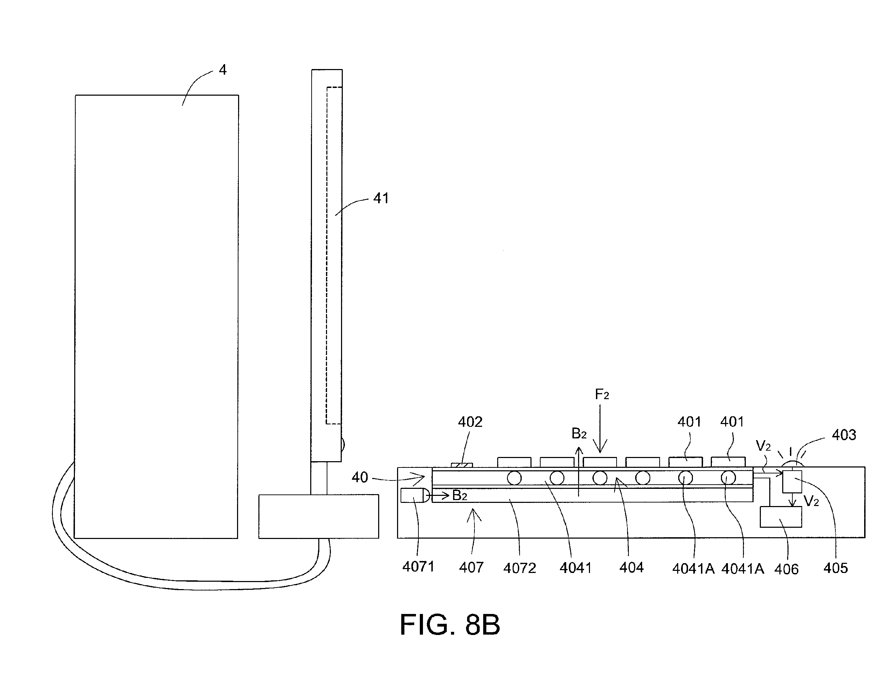

The present invention further provides a third embodiment of a keyboard with a mode-switching function. FIGS. 8A and 8B are schematic side views illustrating the keyboard with a mode-switching function according to a third embodiment of the present invention. As shown in FIG 8A, a computer host 4 is in communication with a keyboard 40 and a display screen 41. In this embodiment, the computer host 4 is a desktop computer. The display screen 41 is in communication with the computer host 4 through a physical connecting wire. The keyboard 40 is in communication with the computer host 4 according to a wireless transmission technology. The keyboard 40 comprises plural keys 401, a mode-switching key 402, a mode-indicating lamp 403, a membrane switch circuit module 404, a mode-switching program 405, a controlling unit 406 and an illumination module 407.

The plural keys 401 are exposed outside the surface of the keyboard 40 to be depressed by the user in response to a first pressure F1 or a second pressure F2. The membrane switch circuit module 404 is disposed under the plural keys 401. In addition, the membrane switch circuit module 404 comprises a pressure detecting circuit 4041 for detecting the first pressure F1 (or the second pressure F2), and generating a first pressure-strength sensing voltage V1 (or a second pressure-strength sensing voltage V2). The pressure detecting circuit 4041 comprises plural pressure detecting elements 4041A corresponding to respective keys 401. The mode-switching program 405 is burned into a circuit board (not shown) within the keyboard 40. When the mode-switching program 405 is executed, the operating mode of the keyboard 40 is switched from a basic mode to a pressure sensitive mode. The controlling unit 406 is connected with the plural keys 401 and the pressure detecting circuit 4041. The controlling unit 406 has a preset threshold voltage value. According to the preset threshold voltage value, the controlling unit 406 may judge the strength of the first pressure F1 or the second pressure F2 when the keyboard 40 is in the pressure sensitive mode. The mode-switching key 402 is exposed outside the surface of the keyboard 40. By depressing the mode-switching key 402, the mode-switching program 405 is executed to enable the pressure detecting circuit 4041 and the illumination module 407, and thus the keyboard 40 is switched from the basic mode to the pressure sensitive mode. Alternatively, by depressing the mode-switching key 402, the mode-switching program 405 is executed to disable the pressure detecting circuit 4041 and the illumination module 407, and thus the keyboard 40 is switched from the pressure sensitive mode to the basic mode. That is, when the mode-switching key 402 is depressed by the user, the mode-switching program 405 is executed mode-switching program 405 is executed to switch the operating mode of the keyboard 40 between the basic mode and the pressure sensitive mode.

The illumination module 407 is connected with the mode-switching program 405 and the controlling unit 406. The illumination module 407 comprises plural light emitting diodes 4071 and a light guide plate 4072. For clarification, only one light emitting diode 4071 is shown in the drawing. The plural light emitting diodes 4071 are used for emitting either a first light beam B1 or a second light beam B2. In this embodiment, the first light beam B1 has a first light color (e.g. a blue light color), and the second light beam B2 has a second light color (e.g. a green light color). The light guide plate 4072 is disposed under the pressure detecting circuit 4041 for changing the propagating directions of the first light beam B1 and the second light beam B2. The mode-indicating lamp 403 is exposed outside the surface of the keyboard 40. The mode-indicating lamp 403 illuminates to indicate that the keyboard 40 is in the pressure sensitive and luminous mode.

As shown in FIG. 8A, the keyboard 40 is operated in the pressure sensitive and luminous mode. In a case that the first key 401 is depressed by the user in response to the first pressure F1 the first pressure detecting element 4041A of the pressure detecting circuit 4041 corresponding to the first key 401 detects the first pressure F1 and generates the first pressure-strength sensing voltage V1 in response to the first pressure F1. By comparing the first pressure-strength sensing voltage V1 with the preset threshold voltage value, the controlling unit 406 may judge the strength of the first pressure F1. When the controlling unit 406 judges that the first pressure-strength sensing voltage V1 is lower than the preset threshold voltage value, the computer host 4 executes a lightly-depressed instruction and the plural light emitting diodes 4071 of the illumination module 407 emit the first light beam B1 By the light guide plate 4072 of the illumination module 407, the propagating direction of the first light beam B1 is changed. In this embodiment, the first light beam B1 has a first light color (e.g. a blue light color). That is, if the first key 401 is depressed by the user in response to the first pressure F1, the computer host 4 executes an instruction of outputting the small letter "a", and the keyboard 40 exhibits the blue light.

Please refer to FIG. 8B. In a case that the first key 401 is depressed by the user in response to the second pressure F2, the first pressure detecting element 4041A of the pressure detecting circuit 4041 detects the second pressure F2 and generates a second pressure-strength sensing voltage V2 in response to the second pressure F2. By comparing the second pressure-strength sensing voltage V2 with the preset threshold voltage value, the controlling unit 406 may judge the strength of the second pressure F2. When the controlling unit 406 judges that the second pressure-strength sensing voltage V2 is higher than or equal to the preset threshold voltage value, the computer host 4 executes a heavily-depressed instruction and the plural light emitting diodes 4071 of the illumination module 407 emit the second light beam B2. By the light guide plate 4072 of the illumination module 407, the propagating direction of the second light beam B2 is changed. In this embodiment, the second light beam B2 has a second light color (e.g. a green light color). That is, if the first key 401 is depressed by the user in response to the second pressure F2, the computer host 4 executes an instruction of outputting the capital letter "A", and the keyboard 40 exhibits the green light. The contents shown on the display screen 41 are similar to those shown on the display screen 31 of the second embodiment, and are not redundantly described herein.

In the above embodiments, the process of switching the operating mode of the keyboard of the present invention is performed by depressing an additional mode-switching key. It is noted that, however, it is not necessarily to equip the additional mode-switching key on the keyboard. That is, a specified key or composite key of the current plural keys may be served as the mode-switching key. By depressing the specified key or composite key, the operating mode of the keyboard is switched according to the settings of the mode-switching program. In some embodiment, according to the settings of the mode-switching program, the mode-switching program is executed to change the operating mode of the keyboard when the key "Ctrl" and the key "F1" are simultaneously depressed. For example, by simultaneously depressing the key "Ctrl" and the key "F1", the operating mode of the keyboard is switched from the basic mode to the pressure sensitive mode. By simultaneously depressing the key "Ctrl" and the key "F1" again, the operating mode of the keyboard is switched from the pressure sensitive mode to the pressure sensitive and luminous mode. The rest may be deduced by analogy. In some embodiments, according to the settings of the mode-switching program, the keyboard is operated in the basic mode by successively depress the key "Ctrl" and the key "F1"; the keyboard is operated in the pressure sensitive mode by successively depress the key "Ctrl" and the key "F2", and the keyboard is operated in the pressure sensitive and luminous mode by successively depress the key "Ctrl" and the key "F3". The rest may be deduced by analogy.

From the above description, the keyboard of the present invention has a mode-switching function. By depressing one or more mode-switching keys, the operating mode of the keyboard may be switched between different modes. Moreover, according to the turning on/off statuses of one or more mode-indicating lamps, the user may realize the current operating mode of the keyboard. Since the user may change the operating mode of the keyboard according to the practical requirement, the flexibility of using the keyboard is enhanced.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A keyboard with a mode-switching function, said keyboard being in communication with a computer host, said keyboard comprising:
at least one key to be depressed in response to a pressure;
a pressure sensing circuit for detecting said pressure, and generating a corresponding pressure-strength sensing voltage in response to said pressure;
a mode-switching program executable to have said keyboard operate in a pressure sensitive mode; and
a controlling unit connected with said key and said pressure sensing circuit for detecting a strength of said pressure when said keyboard is operated in said pressure sensitive mode, wherein if said controlling unit judges that said pressure-strength sensing voltage is lower than said preset threshold voltage value, said computer executes a lightly-depressed instruction, wherein if said controlling unit judges that said pressure-strength sensing voltage is higher than or equal to said preset threshold voltage value, said computer executes a heavily-depressed instruction.

2. The keyboard with a mode-switching function according to claim 1 wherein said computer host is in communication with a display screen, wherein in response to said lightly-depressed instruction, a small letter of an English letter corresponding to said depressed key is shown on said display screen, wherein in response to said heavily-depressed instruction, a capital letter of said English letter corresponding to said depressed key is shown on said display screen.

3. The keyboard with a mode-switching function according to claim 1 wherein said keyboard further comprises a first mode-switching key, wherein by depressing said first mode-switching key, said mode-switching program is executed to have said keyboard operate in said pressure sensitive mode.

4. The keyboard with a mode-switching function according to claim 1 wherein said keyboard further comprises a first mode-indicating lamp for illuminating to indicate that said keyboard is in said pressure sensitive mode.

5. The keyboard with a mode-switching function according to claim 1 wherein said keyboard further comprises an illumination module connected with said controlling unit, wherein said mode-switching program is further executable to have said keyboard operate in a luminous mode.

6. The keyboard with a mode-switching function according to claim 5 wherein said keyboard is operated in said luminous mode, wherein if said controlling unit judges that said pressure-strength sensing voltage is lower than said preset threshold voltage value, said illumination module emits a first light beam, wherein if said controlling unit judges that said pressure-strength sensing voltage is higher than or equal to said preset threshold voltage value, said illumination module emits a second light beam.

7. The keyboard with a mode-switching function according to claim 6 wherein said keyboard further comprises a second mode-switching key, wherein by depressing said second mode-switching key, said mode-switching program is executed to have said keyboard operate in said luminous mode.

8. The keyboard with a mode-switching function according to claim 7 wherein said keyboard further comprises a first mode-indicating lamp for illuminating to indicate that said keyboard is in said luminous mode.

9. A keyboard with a mode-switching function, said keyboard being in communication with a computer host, said keyboard comprising:
at least one key to be depressed in response to a pressure;
a pressure sensing circuit for detecting said pressure, and generating a corresponding pressure-strength sensing voltage in response to said pressure;
an illumination module for emitting either a first light beam or a second light beam;
a mode-switching program executable to enable both said pressure sensing circuit and said illumination module, so that said keyboard is operated in a pressure sensitive and luminous mode; and
a controlling unit connected with said key, said pressure sensing circuit and said illumination module, wherein when said keyboard is operated in said pressure sensitive and luminous mode, said illumination module is controlled by said controlling unit to emit either said first light beam or said second light beam according to a strength of said pressure, wherein if said controlling unit judges that said pressure-strength sensing voltage is lower than said preset threshold voltage value, said computer executes a lightly-depressed instruction and said illumination module emits said first light beam, wherein if said controlling unit judges that said pressure-strength sensing voltage is higher than or equal to said preset threshold voltage value, said computer executes a heavily-depressed instruction and said illumination module emits said second light beam.

10. The keyboard with a mode-switching function according to claim 9 wherein said keyboard further comprises a mode-switching key, wherein by depressing said mode-switching key, said mode-switching program is executed to have said keyboard operate in said pressure sensitive and luminous mode.

11. The keyboard with a mode-switching function according to claim 10 wherein said keyboard further comprises a mode-indicating lamp for illuminating to indicate that said keyboard is in said pressure sensitive and luminous mode.
